# EUROPEAN PATENT APPLICATION

(11) **EP 2 187 564 A1**
(43) Date of publication of application: **19.05.2010**
(21) Application number: 08784124.3
(22) Date of filing: 25.08.2008
(51) Int. Cl.: H04L 12/14

(54) **VIRTUAL PRIVATE NETWORK CHARGING METHOD AND SYSTEM**

(30) Priority: 17.01.2008 CN 200810001898
(71) Applicant: Huawei Technologies Co., Ltd., Longgang District, Shenzhen Guangdong 518129 (CN)
(72) Inventor: YE, Zhenghui c/o Huawei Technologies Co.Ltd., Longgang District 518129, Shenzhen (CN); YE, Jing c/o Huawei Technologies Co.Ltd., Longgang District 518129, Shenzhen (CN)
(74) Representative: Kreuz, Georg Maria
(86) International application number: PCT/CN2008/072134
(87) International publication number: WO 2009/089696

(57) **Abstract**

A method and a system for implementing VPN charging are disclosed herein. The method includes: receiving a charging request sent by a call access control network element, where the charging request carries VPN information and charging information of a calling party and/or a called party; notifying the call access control network element to continue the call process if the user account balance is enough or if the user account balance is not enough but the user credit limit fulfills requirements; and deducting the corresponding expense from the user account balance in real time according to the received VPN information and charging information or recording the expense. Through the embodiments of the present invention, the PPS mode is integrated with the PUB mode properly, and the PPS users and the PUB users enjoy the same experience.

## Description

### FIELD OF THE INVENTION

The present invention relates to communication technologies, and in particular, to a method and a system for Virtual Private Network (VPN) charging.

### BACKGROUND

In the conventional technologies, the VPN is a logical voice channel dedicated network set up on a Public Land Mobile-communication Network (PLMN) and a Public Switched Telephone Network (PSTN). Through this dedicated network, the users in an enterprise can communicate with each other in a group by means of abbreviated dialing and a specialized numbering plan. With the VPN service in the PLMN, a dedicated network service similar to the Private Branch Exchange (PBX) in the PSTN may be provided for the mobile users who have subscribed to the VPN service in the group.

In the conventional technologies, the VPN service may be implemented in two modes: intelligent network mode and Business Operation Supporting System (BOSS) mode. The two modes have their respective charging methods. The two modes and the charging methods of such modes are described below.

In an intelligent network, user data is distributed on Service Control Points (SCPs) according to certain rules, and the call triggering is based on the intelligent network technologies. In the VPN service implemented in the intelligent network mode, according to different charging methods, typical call processes are classified into a PrePaid Service (PPS) user call process and a Post Usage Billing (PUB) user call process. However, the VPN service implemented in the intelligent network mode is unable to integrate the PPS with the PUB service effectively, thus leading to the following defects:
1. The system can perform real-time charging and deduction for PPS users, but cannot perform such functions for PUB users. Consequently, the PPS user experiences differently from the PUB user in the intelligent network.
2. In the conventional technologies, the account data of the PPS user is stored on the intelligent network, and the account data of the PUB user is stored on the BOSS system. The data model of the intelligent network system is different from that of the BOSS system, the shift between the PPS mode and the PUB mode involves very difficult data migration between the intelligent network system and the BOSS system. Consequently, it is impossible to shift between the PPS mode and the PUB mode flexibly.

Besides, the conventional technology is also defective in high cost of construction, and long time spent in adding a new feature or developing a new function.

In the network that implements a VPN service in the BOSS mode, the user terminal is a communication device for originating or receiving a call; the switch is adapted to route and switch voice channels, and generate a Call Detail Record (CDR) after the user makes a conversation; and the CDR collecting system is adapted to obtain user conversation records from the switch, and analyze and sort the records elementarily. The rating and charging system is adapted to calculate the expense and deduct the corresponding account balance according to the user information, products subscribed to by the user, and the conversation records. The customer service system is adapted to provide various services for the user. The operation analysis system is adapted to analyze the conversation behavior of the user as a marketing reference for the operator.

However, the VPN service implemented in the BOSS mode supports only PUB users, and is unable to integrate the PPS mode with the PUB mode. Therefore, it is impossible to perform real-time charging or deduction for the users who use the VPN service. Consequently, the users are unable to know the call expense or the account balance in real time, or obtain the real-time experience available from the PPS service.

In the BOSS mode, the control point of the conversation is the switch. The switching network is unable to provide short number translation unless the service logics are changed. Therefore, neither the short number dialing nor the short number caller ID display is supported.

In conclusion, in the VPN service provided in the conventional technologies, it is impossible to integrate the PPS with the PUB service. Consequently, the PPS user experiences the service differently from the PUB user, and it is impossible to shift between the PPS mode and the PUB mode flexibly.

### SUMMARY

Accordingly, it is necessary to provide a method, an apparatus, and a system for implementing VPN charging in order to integrate the PPS with the PUB service.

The technical solutions put forward in the embodiments of the present invention are as follows:
A VPN charging method provided in an embodiment of the present invention includes:
   receiving a charging request sent by a call access control network element, where the charging request carries VPN information and charging information of a calling party and/or a called party;
   notifying the call access control network element to continue the call process if the user account balance is enough or if the user account balance is not enough but the user credit limit fulfills requirements; and
   deducting the corresponding expense from the user account balance in real time according to the received VPN information and charging information or recording the expense.

A rating and charging network element for implementing VPN charging provided in an embodiment of the present invention includes:
a charging request receiving unit, adapted to: receive a charging request sent by the call access control network element, where the charging request carries VPN information and charging information of the calling party and/or the called party; and send the VPN information and the charging information to a rating unit and a deducting unit;
a rating unit, adapted to: judge the user account balance according to the received VPN information and charging information; and, if the user account balance is enough, or if the user account balance is not enough but the user credit limit fulfills requirements, notify the call access control network element that the rating succeeds; and
a deducting unit, adapted to: deduct the corresponding expense from the user account balance in real time according to the VPN information and the charging information or record the expense after receiving the notification about rating success from the rating unit.

A VPN charging system provided in an embodiment of the present invention includes: a call access control network element, and a rating and charging network element.

The call access control network element is adapted to:
receive a call request sent by a user terminal through a switch, determine VPN information of the calling party and/or the called party, and send the VPN information and the charging information to the rating and charging network element; and
control whether to continue the call process according to the rating result of the rating and charging unit.

The rating and charging network element is adapted to:
judge the user account balance; and, if the user account balance is enough, or if the user account balance is not enough but the user credit limit fulfills requirements, notify the call access control network element that the rating succeeds; otherwise, notify the call access control network element that the rating fails; and
after the rating succeeds, calculate the expense generated by the call in real time according to the VPN information and the charging information, and deduct the calculated expense from the user account balance in real time or record the expense.

A computer program product provided in an embodiment of the present invention includes computer program codes. When being executed by one or more processors, the computer program codes perform the following steps:
receiving a charging request sent by a call access control network element, where the charging request carries VPN information and charging information of a calling party and/or a called party; and
notifying the call access control network element to continue the call process if the user account balance is enough or if the user account balance is not enough but the user credit limit fulfills requirements; and deducting the corresponding expense from the user account balance in real time according to the received VPN information and charging information or recording the expense.

In the embodiments of the present invention, the rating and charging network element performs rating according to the user account balance, and, if the user account balance is not enough, performs rating according to the user credit limit, and notifying the rating result to the access control network element. Therefore, the access control network element can control whether to continue the call routing process according to the rating result. In this way, PPS mode is integrated with the PUB mode properly, the PPS users and the PUB users obtain the same experience, and flexible shift between the PPS mode and the PUB mode is accomplished.

### BRIEF DESCRIPTION OF THE DRAWINGS

FIG. 1 shows a system provided in an embodiment of the present invention;
FIG. 2 is a flowchart of a method provided in an embodiment of the present invention;
FIG. 3 is a call originating flowchart of a method provided in an embodiment of the present invention; and
FIG. 4 is a call terminating flowchart of a method provided in an embodiment of the present invention.

### DETAILED DESCRIPTION

The embodiments of the present invention are elaborated below with reference to accompanying drawings.

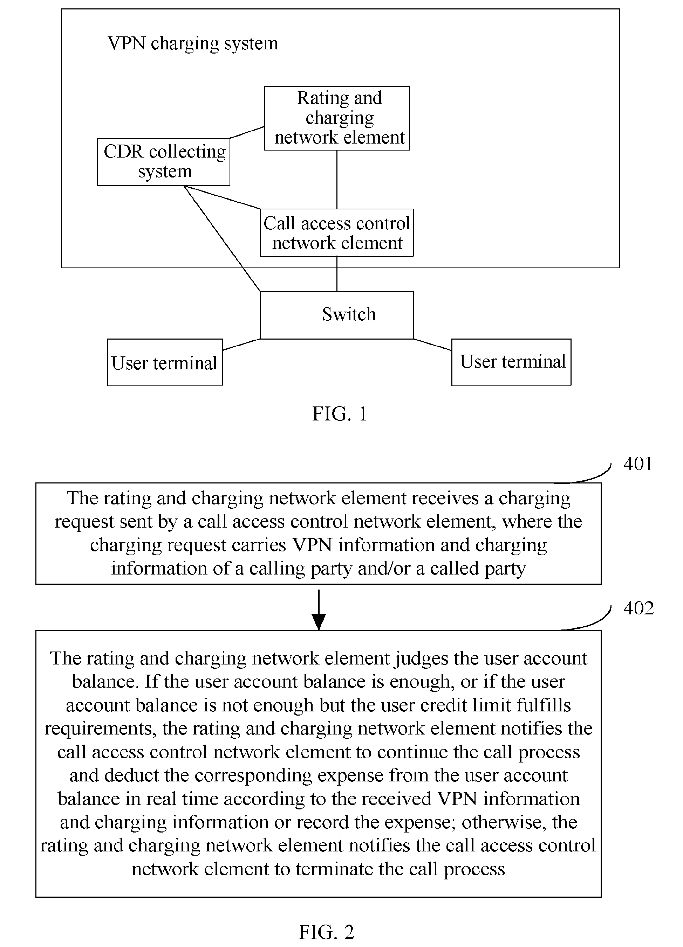

As shown in FIG. 1, a VPN charging system provided in an embodiment of the present invention includes: a call access control network element, and a rating and charging network element.

The call access control network element is adapted to:
receive a call request sent by a user terminal through a switch, determine VPN information of the calling party and/or the called party, and send the VPN information and the charging information to the rating and charging network element; and
control whether to continue the call process according to the rating result of the rating and charging unit.

The rating and charging network element is adapted to:
judge the user account balance; and, if the user account balance is enough, or if the user account balance is not enough but the user credit limit fulfills requirements, notify the call access control network element that the rating succeeds; otherwise, notify the call access control network element that the rating fails; and
after the rating succeeds, calculate the expense generated by the call in real time according to the VPN information and the charging information, and deduct the calculated expense from the user account balance in real time or record the expense.

In the embodiments of the present invention, in order to implement the specific functions of the VPN service, the call access control network element may be further adapted to: translate a short number, control the short number caller ID display, and judge intra-network call relationships and/or control rights.

In other embodiments of the present invention, in order to implement specific functions of the VPN service, a third-party system can be used to translate the short number, control the short number caller ID display, judge intra-network call relationships and/or control rights, and send the processing result to the call access control network element. The call access control network element continues the call and charging process according to the processing result. The foregoing mode is applicable when the operator needs to build a new integrated charging network on an existing network that runs VPN services. In this case, it is necessary only to shift the service trigger point of the VPN user from the VPN service trigger device of the existing network to the access control network element, and set up an information interaction channel between the access control network element and the VPN service device of the existing network. In this way, the call access control network element sends a message to the VPN service device of the existing network, and this device is responsible for the functions such as translating the short number and judging the VPN rights.

In practice, sometimes the rating and charging network element fails. In order to prevent the failure from affecting the normal call and charging process, the call access control network in the embodiment of the present invention may be further adapted to:
judge whether the rating and charging network element fails; if the rating and charging network element fails, control to continue the call process and generate the corresponding CDR according to the VPN information and the charging information.

Accordingly, the system further includes a CDR collecting unit. The CDR collecting unit is adapted to: collect CDRs from the call access control network element; and, after the rating and charging network element recovers to normal, transmit the collected CDRs to the rating and charging network element for deducting expenses. The CDR collecting unit not only collects CDRs from the call access control network element, but also obtains the CDRs that need to be settled from other charging-related devices to implement specific charging requirements. For example, for PUB users, the CDR collecting unit obtains the corresponding CDRs from a charging device in another network in order to charge an international roam user.

After the rating and charging network element fails, the call access control network element can exercise direct control to continue the call and generate the corresponding CDR. Therefore, even if the rating and charging network element fails, the call and charging process still goes on normally.

The system in an embodiment of the present invention further includes:
an OAM unit, adapted to: provide Operation, Administration and Maintenance (OAM) functions for the operator. For example, the OAM unit analyzes the conversation behavior of the user, and submits the analysis result to the operator as a reference for marketing.

The system in another embodiment of the present invention further includes:
a customer service unit, adapted to provide various services for the customer so that the customer can customize, modify and delete the relevant service through this unit.

The method provided in an embodiment of the present invention is elaborated below.

As shown in FIG. 2, the method includes the following steps:
Step 401: The rating and charging network element receives a charging request sent by a call access control network element, where the charging request carries VPN information and charging information of a calling party and/or a called party.
Step 402: The rating and charging network element judges the user account balance. If the user account balance is enough, or if the user account balance is not enough but the user credit limit fulfills requirements, the rating and charging network element notifies the call access control network element to continue the call process and deduct the corresponding expense from the user account balance in real time according to the received VPN information and charging information or record the expense; otherwise, the rating and charging network element notifies the call access control network element to terminate the call process.

In an embodiment of the present invention, in order to implement specific functions of the VPN service, the method may further include:
After the user activates the VPN service, the call access control network element translates the short number, controls the short number caller ID display, and judges intra-network call relationships and/or controls rights. In other embodiments of the present invention, the VPN service-related functions such as short number translation, control of the short number caller ID display, intra-network call relationship judgment and/or rights control may be handled by a third-party system. The processing result is returned to the call access control network element. The call access control network element goes on with subsequent steps according to the processing result.

In order to prevent the failure of the rating and charging network element from affecting the normal call and charging process, the method may further include:
After determining that the rating and charging network element fails, the call access control network element controls to continue the call process, and generates the corresponding CDR according to the VPN information and the charging information. The CDR collecting unit collects the CDRs generated by the call access control network element according to the preset rules, and submits the CDRs to the rating and charging network element for deducting expenses.

Supposing that the switching network is a GSM mobile network and the GSM mobile user uses a VPN service, the method of charging the calling party and the called party is elaborated below.

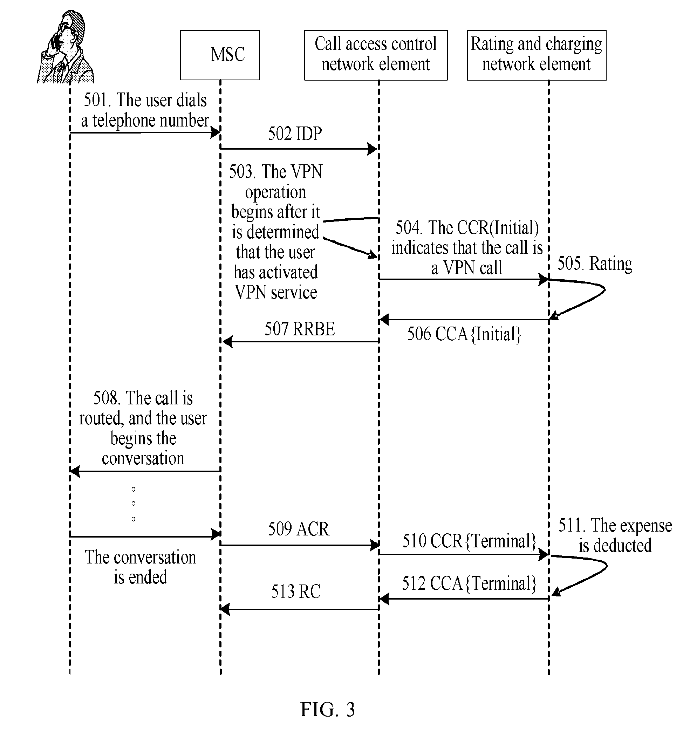

As shown in FIG. 3, in the case of charging a calling party, the method provided in an embodiment of the present invention includes the following steps:
Steps 501-502: The calling party dials a short number of the called party. The home Mobile Switching Center (MSC) of the calling party triggers a charging service according to the subscription information of the user, and sends an Initial Detection Point (Initial DP) message to the call access control network element.
Step 503: After determining that the calling party has activated the VPN service, the call access control network element performs the VPN service operations such as translating the short number of the called party, controlling the short number caller ID display, judging the intra-network call relationship and/or controlling the rights.
Step 504: After determining that the calling party has activated the VPN service, the call access control network element sends a charging request to the rating and charging network element. The charging request indicates that the call is a VPN call. In this embodiment, the Diameter Credit Control (DCC) protocol is applied. Accordingly, the charging request sent by the call access control network element to the rating and charging network element is a Credit Control Request (CCR) message, namely, CCR {Initial}, in the DCC protocol. This message indicates that the call is a VPN call. In this embodiment, the parameters carried in the CCR message include: calling party number, called party number, group number and/or group information.
Step 505: After receiving the charging request, the rating and charging network element pre-calculates the expense of the call, checks the account balance of the calling party in light of the pre-calculation result, and obtains a rating result according to the balance check result. Specifically, the rating and charging network element may perform the rating in the following way:
   If the user account balance is greater than or equal to the pre-calculation result, the rating succeeds. If the user account balance is not enough, the rating and charging network element judges whether the user credit limit fulfills requirements. If the user credit limit fulfills requirements, the rating succeeds; otherwise, the rating fails.
   In this embodiment, because the CCR message indicates that the call is a VPN call. Therefore, in the foregoing rating process, the rating and charging network element pre-calculates the expense of the call as a VPN call. In practice, the pre-calculation may be performed according to the rules set in the VPN service, which is also covered in the protection scope of the present invention.
Step 506: The rating and charging network element notifies the rating result to the call access control network element. In this embodiment, the rating result is notified to the call access control network element through a Credit Control Answer (CCA) message. In other embodiments of the present invention, the rating result may be notified to the call access control network element through other messages.
Step 507: After receiving the rating result from the rating and charging network element, the call access control network element controls the home MSC of the calling party to continue the call routing or not according to the rating result. Specifically, if the rating succeeds, the call access control network element controls the home MSC of the calling party to continue the call routing. If the rating fails, the call access control network element controls the home MSC of the calling party to terminate the call routing. In this embodiment, the call access control network element controls the MSC whether to continue the call routing by sending one of the following messages to the home MSC of the calling party: Request Report Basic Call State Model Event (RRBE) message, Apply Charging (AC) message, or CONNECT message. In other embodiments of the present invention, the control may be exercised by sending other messages.
Step 508: The home MSC of the calling party goes on with the call routing, and routes the call to the terminal of the called party. The calling party talks with the called party through the voice channel set up in the call routing process.
Step 509: When the conversation is in progress or completed, the MSC receives a deduction trigger message from the corresponding terminal, and sends a deduction notification to the call access control network element. In this embodiment, the deduction of the expense is triggered by completion of the conversation. Accordingly, after receiving the conversation completion notification from the corresponding terminal, the MSC sends an Apply Charging Report (ACR) message to the call access control network element, notifying the call access control network element to start deducting the expense. In other embodiments of the present invention, the deduction may be triggered by other conditions, and the deduction notification may be another type of message for notifying the access control network element to start deducting.
Step 510: After receiving the deduction notification, the call access control network element sends a deduction request to the rating and charging network element. In this embodiment, a DCC message is exchanged between the call access control network element and the rating and charging network element to perform charging and deduct the expense. Specifically, the deduction request may be a CCR message. In other embodiments of the present invention, the deduction request may be another type of message.
Step 511: After receiving the deduction request, the rating and charging request determines the expense generated by the conversation according to the corresponding tariff and the duration of the conversation, and deducts the expense from the user account of the calling party or records the expense, thus completing the deduction process.
Steps 512-513: After completion of deducting the expense, the rating and charging network element returns a response to the call access control network element, indicating deduction success. The call access control network element returns a resource control message to the MSC in order to control whether to continue the conversation process or release the conversation resource. In this embodiment, the expense deduction is triggered by completion of the conversation. Therefore, the call access control network element returns a Release Call (RC) message to the MSC after knowing the deduction success, thus notifying the MSC to release the conversation resource. In other embodiments of the present invention, if the deduction is not triggered by completion of the conversation but is performed during the conversation, the call access control network element needs to send the corresponding routing message to the MSC after the rating and charging network element deducts the expense successfully, with a view to notifying the MSC to continue the conversation process.

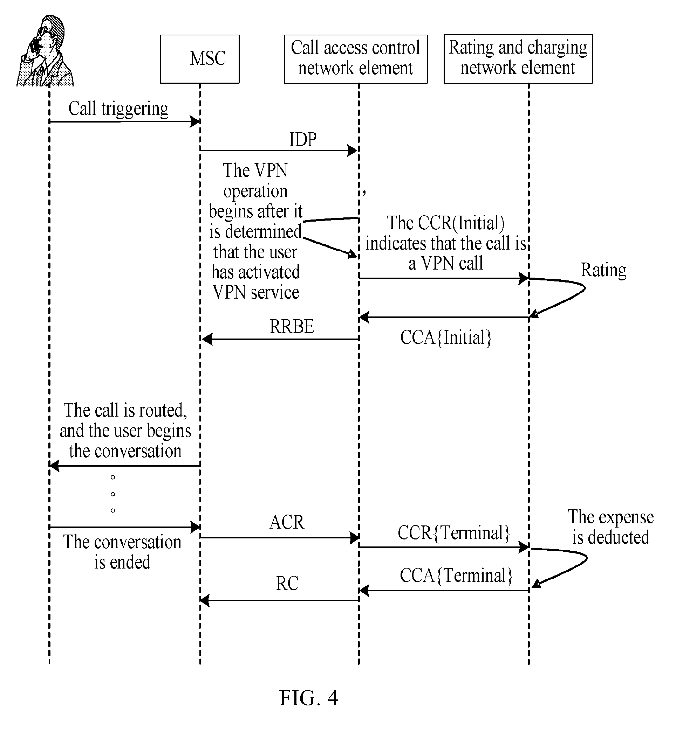

FIG. 4 is a flowchart of a method provided in an embodiment of the present invention in the case that the called party is charged. Compared with the flowchart in FIG. 3, the flowchart in FIG. 4 differs in that the process of charging the called party is triggered when the call is routed to the home MSC of the called party, and the home MSC of the called party interacts with the call access control network element to handle the detailed operations of charging. Other steps are similar to the steps shown in FIG. 3, and are not repeated here any further.

In the foregoing embodiment, a Customized Applications for Mobile Network Enhanced logic Application Part (CAP) protocol of the Wireless Intelligent Network (WIN) is used for signaling interaction between the call access control network element and the switch. In other embodiments of the present invention, the signaling interaction may be performed through an Intelligent Network Application Protocol (INAP) of the fixed intelligent network or the WIN protocol of the Code Division Multiple Access (CDMA) intelligent network. The detailed implementation mode is the same as the foregoing embodiment, and is not repeated here any further.

In the foregoing embodiments, the rating is performed according to the user credit limit. The user credit limit varies with time. Therefore, in the preferred embodiment of the present invention, the method may further include:
adjusting the user credit limit according to the user information, including but not limited to: payment information, user importance, and operator's marking scheme. The user credit limit may be adjusted by the rating and charging network element or by a stand-alone device. The user credit limit stored in the rating and charging network element is updated with the adjusted user credit limit.

Corresponding to the foregoing method, a rating and charging network element for implementing VPN charging is provided in an embodiment of the present invention. The rating and charging network element includes:
a charging request receiving unit, adapted to: receive a charging request sent by the call access control network element, where the charging request carries VPN information and charging information of the calling party and/or the called party; and send the VPN information and the charging information to a rating unit and a deducting unit;
a rating unit, adapted to: judge the user account balance according to the received VPN information and charging information; if the user account balance is enough, or if the user account balance is not enough but the user credit limit fulfills requirements, notify the call access control network element that the rating succeeds; otherwise, notify the call access control network element that the rating fails; and
a deducting unit, adapted to: deduct the corresponding expense from the user account balance in real time according to the VPN information and the charging information or record the expense after receiving the notification about rating success from the rating unit.

In this embodiment, the rating and charging network element further includes:
a credit limit adjusting unit, adapted to adjust the user credit limit according to the payment information of the user.

The embodiments of the present invention may be implemented through a computer program product. The computer program product includes computer program codes. When being executed by one or more processors, the computer program codes perform the following steps:
The rating and charging network element receives a charging request sent by a call access control network element, where the charging request carries VPN information and charging information of a calling party and/or a called party.
The rating and charging network element judges the user account balance, and notifies the call access control network element to continue the call process if the user account balance is enough or if the user account balance is not enough but the user credit limit fulfills requirements, and deducts the corresponding expense from the user account balance in real time according to the received VPN information and charging information or records the expense.

Although the invention is described through some exemplary embodiments, the invention is not limited to such embodiments. It is apparent that those skilled in the art can make modifications and variations to the invention without departing from the spirit and scope of the invention. The invention shall cover the modifications and variations provided that they fall in the scope of protection defined by the following claims or their equivalents.

## Claims

1. A method for implementing virtual private network, VPN, charging, **characterized by** comprising :
receiving a charging request sent by a call access control network element, wherein the charging request carries VPN information and charging information of a calling party and/or a called party;
notifying the call access control network element to continue the call process if the user account balance is enough or if the user account balance is not enough but the user credit limit fulfills requirements; and
deducting the corresponding expense from the user account balance in real time according to the received VPN information and charging information or recording the expense.

2. The method according to claim 1, wherein the charging request is a credit control request, CCR, message to indicate that the call is a VPN call, and the CCR message comprises:
calling party number, called party number, group number and/or group information.

3. The method according to claim 1, wherein the notifying the call access control network comprises: the rating result is notified to the call access control network element through a credit control answer, CCA, message.

4. The method according to claim 1, wherein the method further comprises:
after determining that the rating and charging network element fails, the call access control network element controls to continue the call process, and generates the corresponding call detail records, CDR, according to the VPN information and the charging information, a CDR collecting unit collects the CDRs generated by the call access control network element according to preset rules, and submits the CDRs to the rating and charging network element for deducting expenses.

5. The method according to claim 1, wherein before receiving the charging request sent by the call access control network element, the method further comprises:
translating, by the call access control network element, a short number, controlling the short number caller ID display, and judging intra-network call relationships and/or control rights; or
translating, by a third-party system, the short number, controlling the short number caller ID display, judging intra-network call relationships and/or control rights, and sending the processing result to the call access control network element.

6. The method according to claim 1, wherein the method further comprises:
adjusting the user credit limit according to the user information which comprises payment information, user importance, or operator's marking scheme.

7. The method according to claim 1, wherein the deducting the corresponding expense from the user account balance in real time according to the received VPN information and charging information or recording the expense comprises:
after completing the conversation in the call process, calculating the expense according to a rating and a conversation period, and deducting the corresponding expense from the user account balance in real time; or
in the call process, after receiving the deduction request send by the call access control network element, calculating, by the rating and charging network element, the expense according to the rating and the conversation period, and deducting the corresponding expense from the user account balance in real time.

8. A rating and charging network element for implementing virtual private network, VPN, charging, **characterized by** comprising:
a charging request receiving unit, adapted to: receive a charging request sent by the call access control network element, wherein the charging request carries VPN information and charging information of the calling party and/or the called party; and send the VPN information and the charging information to a rating unit and a deducting unit;
a rating unit, adapted to: judge the user account balance according to the received VPN information and charging information; and, if the user account balance is enough, or if the user account balance is not enough but the user credit limit fulfills requirements, notify the call access control network element that the rating succeeds; and
a deducting unit, adapted to: deduct the corresponding expense from the user account balance in real time according to the VPN information and the charging information or record the expense after receiving the notification about rating success from the rating unit.

9. The rating and charging network element according to claim 8, wherein the rating and charging network element further comprises:
a credit limit adjusting unit, adapted to adjust the user credit limit according to the payment information of the user.

10. A system for virtual private network, VPN, charging, **characterized by** comprising: a call access control network element, and a rating and charging network element, wherein
the call access control network element is adapted to: receive a call request sent by a user terminal through a switch, determine VPN information of the calling party and/or the called party, and send the VPN information and the charging information to the rating and charging network element; and control whether to continue the call process according to the rating result of the rating and charging unit; and
the rating and charging network element is adapted to: judge the user account balance; and, if the user account balance is enough, or if the user account balance is not enough but the user credit limit fulfills requirements, notify the call access control network element that the rating succeeds; otherwise, notify the call access control network element that the rating fails; and
after the rating succeeds, calculate the expense generated by the call in real time according to the VPN information and the charging information, and deduct the calculated expense from the user account balance in real time or record the expense.

11. The system according to claim 10, wherein
the call access control network element is further adapted to: judge whether the rating and charging network element fails; if the rating and charging network element fails, control to continue the call process and generate the corresponding call detail records, CDR, according to the VPN information and the charging information; and
the system further comprises a CDR collecting unit; the CDR collecting unit is adapted to: collect CDRs from the call access control network element; and, after the rating and charging network element recovers to normal, transmit the collected CDRs to the rating and charging network element for deducting expenses.

12. The system according to claim 10, wherein the system further comprises:
an Operation, Administration and Maintenance, OAM, unit, adapted to: provide Operation, Administration and Maintenance functions for the operator; and/or
a customer service unit, adapted to provide various services for the customer so that the customer can customize, modify and delete the relevant service through this unit.

13. A computer program product comprises computer program codes, when being executed by one or more processors, the computer program codes perform the following steps:
receiving a charging request sent by a call access control network element, where the charging request carries VPN information and charging information of a calling party and/or a called party; and
notifying the call access control network element to continue the call process if the user account balance is enough or if the user account balance is not enough but the user credit limit fulfills requirements; and deducting the corresponding expense from the user account balance in real time according to the received VPN information and charging information or recording the expense.
